# FASCICULE DE BREVET EUROPEEN

(11) **EP 1 549 091 B1**
(45) Date de publication et mention de la délivrance du brevet: **08.02.2017**
(21) Numéro de dépôt: 04293066.9
(22) Date de dépôt: 20.12.2004
(51) Int. Cl.: H04W 12/00

(54) **Terminal avec des moyens de protection contre le dysfonctionnement de certaines applications java**
Endgerät mit Schutz gegen den Ausfall von bestimmten Java-Applikationen
Terminal with means for protection against the malfunctioning of certain Java applications

(30) Priorité: 23.12.2003 FR 0315437
(43) Date de publication de la demande: 29.06.2005
(73) Titulaire: ALCATEL LUCENT, 92100 Boulogne-Billancourt (FR)
(72) Inventeur: Dufeutrelle, Laurent, 60460 Precy/Oise (FR)
(74) Mandataire: Berthier, Karine

(56) Documents cités:
- WO-A-03/012644
- US-A- 5 257 373
- US-A- 6 075 863
- US-A1- 2002 013 910
- US-A1- 2002 160 752
- US-A1- 2002 188 649

## Description

La présente invention concerne un terminal de radiocommunication non sensible aux programmes d'application défaillants.

Un des domaines d'application, non exclusif, de l'invention est celui des terminaux mobiles de radiocommunication fonctionnant dans un système de radiocommunication. L'invention s'applique notamment, mais non exclusivement, à un système ou réseau selon les standards GSM (Groupe spécial Systèmes Mobiles publics de radiocommunication), DCS, PCS ou UMTS.

Un terminal de radiocommunication comprend différents types de ressources indispensables à son fonctionnement, telles qu'une interface homme-machine comprenant, par exemple, un clavier et un écran d'affichage qui peuvent être rétro-éclairés, et telles que différentes mémoires pour permettre l'enregistrement des données inhérentes au fonctionnement du terminal.

Parmi ces mémoires, se trouve une mémoire persistante appelée « mémoire flash » qui a la particularité d'être une mémoire persistante même si le terminal n'est plus alimenté en énergie, ce qui permet par exemple de garder l'heure et la date en mémoire pour le présenter à l'utilisateur quand celui-ci alimente à nouveau son terminal.

Dans les terminaux de radiocommunication récents, il est possible de télécharger depuis le réseau de radiocommunication, dans lequel ce terminal évolue, des programmes d'applications programmées en langage de programmation Java.

Ces programmes d'applications Java, par exemple des jeux, permettent aux utilisateurs d'utiliser des jeux non pré-enregistrés dans leurs terminaux par le constructeur.

Lorsque ces programmes d'applications Java sont utilisées dans le terminal, elles sollicitent les différentes ressources du terminal, dont par exemple la mémoire flash, et/ou le rétroéclairage du clavier et/ou de l'écran d'affichage.

Cependant certains programmes d'applications Java sont défaillantes, parfois de façon volontaire de la part des concepteurs.

Ces défaillances peuvent provoquer alors des dommages irréversibles sur les ressources du terminal et le rendre inutilisable.

Un autre exemple ce trouve dans le document US5257373.

L'invention a pour but de présenter une solution pour éviter que des programmes d'applications Java défaillantes n'endommagent les ressources du terminal.

L'invention, à cet effet, concerne, un terminal comprenant des ressources, des moyens pour télécharger un programme d'application, des moyens pour enregistrer ce programme d'application dans le terminal ; caractérisé en ce qu'il comprend, en outre, des moyens pour détecter si ce programme d'application active au moins une fonction mettant en péril au moins une des ressources du terminal, des moyens pour déterminer si le nombre d'activations pendant une durée prédéterminée est supérieure à une valeur prédéterminée et dans ce cas des moyens pour effacer du terminal ce programme d'application.

Un terminal selon l'invention peut être un appareil de radiomessagerie ou un assistant personnel numérique (personnal digital assistant ou PDA en anglais), ou.un terminal de type GSM850, GSM900, DCS (Digital Communication System en anglais), UMTS (Universal Mobile Télécommunications System en anglais) ou encore un téléphone de type DECT (Digital European Cordless Télécommunications en anglais), ce terminal peut en outre intégrer les fonctions GPS 1.5GHz (Global Positionning System en anglais) ou Wi-Fi 2.5GHz (Wireless Fidelity en anglais).

D'autres caractéristiques et avantages de l'invention apparaîtront à la lecture de la description suivante d'un mode de réalisation particulier de l'invention, donné à titre illustratif et pas limitatif, et des dessins énoncés ci-dessous.

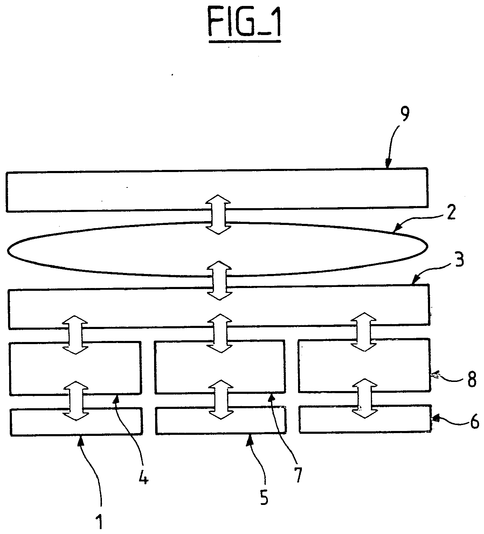

La figure 1 illustre les différentes parties de programmes qui entrent en jeu entre un programme d'application 9 téléchargé et la mémoire flash du terminal selon l'invention.

Un programme d'application 9 est téléchargé depuis le réseau par l'utilisateur du terminal.

Ce programme d'application 9 peut être un programme en langage Java ou tout autre langage informatique.

Si ce programme d'application 9, par exemple, Java est défaillant, il peut activer des fonctions récurrentes qui peuvent mettre en péril les ressources du terminal.

Parmi ces ressources indispensables pour le fonctionnement du terminal, se trouve la mémoire flash 1.

La mémoire flash 1 est pilotée par un module logiciel appelé gestionnaire 4 de mémoire flash 1 (Flash Driver en anglais) .

Dans le cas de la mémoire flash 1, un certain nombre de cycles écriture puis effacement peuvent la détruire.

Par exemple après 100000 cycles d'écriture - effacement sur la mémoire flash 1, la mémoire flash des terminaux actuels sera détruite et les terminaux seront inutilisables.

Dans un terminal de radiocommunication, différentes parties de programmes entrent en jeu pour analyser un programme d'application 9 Java téléchargé dans le terminal puis pour la faire tourner dans le terminal, par exemple pour lancer le début du jeu s'il s'agit d'un programme d'application 9 relative à un jeu.

Ces différentes parties de programmes comprennent tout d'abord un module logiciel dit machine virtuelle 2 (virtual machine, en anglais).

Cette machine virtuelle 2 interprète ce que doit faire l'application Java, c'est à dire les instructions de l'application Java.

Si l'application Java demande à aller stocker des données dans la mémoire flash 1, la machine virtuelle 2 utilise un module logiciel appelé couche d'adaptation 3 (device layer, en anglais) pour accéder au gestionnaire 4 de la mémoire flash 1.

La couche d'adaptation 3 est une interface entre la machine virtuelle 2 et le gestionnaire 4 de la mémoire flash 1.

La couche d'adaptation 3 permet de transmettre les instructions de la machine virtuelle 2 au gestionnaire 4 de la mémoire flash 1.

La couche d'adaptation 3 va enfin permettre de décompter le nombre de cycles d'écriture - effacement sur la mémoire flash 1 effectué en un laps de temps prédéterminé.

Si ce nombre atteint, par exemple, le dixième du nombre de cycles maximaux possibles, soit environ 10000 cycles en une journée, alors l'application Java est automatiquement détruite après avertissement de l'utilisateur du terminal.

Cet avertissement peut consister en la phrase « l'application Java XXXX est défaillante, elle provoque des dommages irréversibles à votre terminal, et va être détruite. »

Parmi ces ressources indispensables pour le fonctionnement du terminal, se trouvent également l'écran d'affichage 5 et le clavier 6 rétroéclairés.

Dans le cas du clavier 6 et de l'écran d'affichage 5, un certain nombre d'activation du rétroéclairage peuvent les détruire.

Le rétroéclairage du clavier 6 etde l'écran d'affichage 5 sont pilotés respectivement par un gestionnaire 7 du rétroéclairage de l'écran d'affichage 5et par un gestionnaire 8 du rétroéclairage du clavier 6.

Comme dans le cas précédent la machine virtuelle 2 interprète ce que doit faire l'application Java, c'est à dire les instructions de l'application Java.

Si l'application Java demande à aller activer des fonctions telles que l'activation récurrente des diodes de rétro-éclairage du clavier 6 et/ou de l'écran d'affichage 5, la machine virtuelle 2 utilise un module logiciel appelé couche d'adaptation 3 (device layer, en anglais) pour accéder au gestionnaire 8 du rétroéclairage du clavier 6 et/ou au gestionnaire 7 du rétroéclairage de l'écran d'affichage 5.

La couche d'adaptation 3 est l'interface entre la machine virtuelle 2 et le gestionnaire 7 du rétroéclairage de l'écran d'affichage 5 et entre la machine virtuelle 2 et le gestionnaire 8 du rétroéclairage du clavier 6.

La couche d'adaptation 3 permet de transmettre les instructions de la machine virtuelle 2 aux gestionnaires 7 et 8 du rétroéclairage, respectivement de l'écran d'affichage 5 et du clavier 6.

La couche d'adaptation 3 va enfin permettre de décompter le nombre de cycles d'activation et de désactivation du rétro-éclairage du clavier 6 et de l'écran d'affichage 5 effectué en un laps de temps prédéterminé selon les caractéristiques du clavier 6 et de l'écran d'affichage 5.

Si un nombre prédéterminé de cycles d'activation et de désactivation du rétro-éclairage du clavier 6 et de l'écran d'affichage 5, fonction des caractéristiques du clavier 6 et de l'écran d'affichage 5, est atteint, alors l'application Java est automatiquement détruite après avertissement de l'utilisateur du terminal.

Cet avertissement peut consister en la phrase « l'application Java XXXX est défaillante, elle provoque des dommages irréversibles à votre terminal, et va être détruite. »

## Revendications

1. Terminal comprenant des ressources, des moyens pour télécharger un programme d'application (9), des moyens pour enregistrer ce programme d'application (9) dans le terminal ; comprenant, en outre, des moyens (3) pour détecter si ce programme d'application (9) active au moins une fonction mettant en péril au moins une des ressources du terminal (1, 5, 6), **caractérisé en ce qu'**il comprend des moyens (3) pour déterminer si le nombre d'activations pendant une durée prédéterminée est supérieure à une valeur prédéterminée et dans ce cas des moyens pour effacer du terminal ce programme d'application (9), les moyens (3) pour détecter et les moyens (3) pour déterminer étant intégrés à une couche d'adaptation (3) qui est une couche d'adaptation interface entre des gestionnaires de ressources (4, 7, 8) du terminal et ce programme d'application (9), les ressources du terminal (1, 5, 6) étant une mémoire persistante, dite mémoire flash (1) et/ou un écran d'affichage (5) rétroéclairé et/ou un clavier (6) rétroéclairé.

2. Terminal de radiocommunication selon la revendication 1, **caractérisé en ce qu'**il comprend un module logiciel dit machine virtuelle (2) du terminal pour interpréter les instructions du programme d'application (9).

3. Terminal selon les revendications 1 et 2, **caractérisé en ce que** la machine virtuelle (2) utilise la couche d'adaptation (3) pour accéder au rétroéclairage de l'écran d'affichage (5) via un gestionnaire (7) de rétroéclairage de l'écran d'affichage (5).

4. Terminal selon les revendications 1 et 2, **caractérisé en ce que** la machine virtuelle (2) utilise la couche d'adaptation (3) pour accéder au rétroéclairage du clavier (6) via un gestionnaire (8) de rétroéclairage du clavier (6).

5. Terminal selon les revendications 1 et 2, **caractérisé en ce que** la machine virtuelle (2) utilise la couche d'adaptation (3) pour accéder à la mémoire flash (1) via un gestionnaire (4) de mémoire flash (1).

6. Terminal selon les revendications 1 à 5, **caractérisé en ce que** le terminal est un terminal de radiocommunication.

7. Terminal selon les revendications 1 à 6, **caractérisé en ce que** le terminal est un assistant personnel numérique.

## Patentansprüche

1. Endgerät, umfassend Ressourcen, Mittel zum Herunterladen eines Anwendungsprogramms (9), Mittel zum Speichern dieses Anwendungsprogramms (9) im Endgerät; weiterhin umfassend Mittel (3) zum Erkennen, ob dieses Anwendungsprogramm (9) mindestens eine Funktion aktiviert, die mindestens eine der Ressourcen des Endgeräts (1, 5, 6) gefährdet, **dadurch gekennzeichnet, dass** es Mittel (3) umfasst, um zu bestimmen, ob die Anzahl von Aktivierungen während einer vorausbestimmten Dauer höher ist als ein vorausbestimmter Wert, und wenn dies der Fall ist, Mittel zum Löschen dieses Anwendungsprogramms (9) aus dem Endgerät, wobei die Mittel (3) zum Erkennen und die Mittel (3) zum Bestimmen in einer Anpassungsschicht (3) integriert sind, die eine Schnittstellen-Anpassungsschicht zwischen Managern von Ressourcen (4, 7, 8) des Endgeräts und diesem Anwendungsprogramm (9) ist, wobei die Ressourcen des Endgeräts (1, 5, 6) ein persistenter Speicher, genannt Flash-Speicher (1) und/oder ein Anzeigedisplay (5) mit Hintergrundbeleuchtung und/oder eine Tastatur (6) mit Hintergrundbeleuchtung sind.

2. Funkkommunikations-Endgerät nach Anspruch 1, **dadurch gekennzeichnet, dass** es ein Softwaremodul, genannt virtuelle Maschine (2) des Endgeräts umfasst, um die Anweisungen des Anwendungsprogramms (9) zu interpretieren.

3. Endgerät nach Anspruch 1 und 2, **dadurch gekennzeichnet, dass** die virtuelle Maschine (2) die Anpassungsschicht (3) verwendet, um auf die Hintergrundbeleuchtung des Anzeigedisplays (5) über einen Manager (7) der Hintergrundbeleuchtung des Anzeigedisplays (5) zuzugreifen.

4. Endgerät nach Anspruch 1 und 2, **dadurch gekennzeichnet, dass** die virtuelle Maschine (2) die Anpassungsschicht (3) verwendet, um auf die Hintergrundbeleuchtung der Tastatur (6) über einen Manager (8) der Hintergrundbeleuchtung der Tastatur (6) zuzugreifen.

5. Endgerät nach Anspruch 1 und 2, **dadurch gekennzeichnet, dass** die virtuelle Maschine (2) die Anpassungsschicht (3) verwendet, um auf den Flash-Speicher (1) über einen Manager (4) des Flash-Speichers (1) zuzugreifen.

6. Endgerät nach Anspruch 1 bis 5, **dadurch gekennzeichnet, dass** das Endgerät ein Funkkommunikations-Endgerät ist.

7. Endgerät nach Anspruch 1 bis 6, **dadurch gekennzeichnet, dass** das Endgerät ein persönlicher digitaler Assistent ist.

## Claims

1. A terminal comprising resources, means for downloading an application program (9), means for saving that application program (9) in the terminal; further comprising means (3) for detecting whether that application program (9) activates at least one function jeopardizing at least one of the resources of the terminal (1, 5, 6), **characterized in that** it comprises means (3) in order to determine whether the number of activations over a predetermined period of time is greater than a predetermined value, and if so, means for erasing from the terminal that application program (9), means (3) for detecting and means (3) for determining being integrated into an adaptation layer (3) which is an interface adaptation layer between resource managers (4, 7, 8) of the terminal and that application program (9), the resources of the terminal (1, 5, 6) being a persistent memory, called the flash memory (1) and/or a backlit display screen (5) and/or a backlit keyboard (6).

2. A radio communication terminal according to claim 1, **characterized in that** it comprises a software module called a virtual machine (2) of the terminal in order to interpret the instructions of the application program (9).

3. A terminal according to claims 1 and 2, **characterized in that** the virtual machine (2) uses the adaptation layer (3) to access the backlighting of the display screen (5) via a backlighting manager (7) of the display screen (5).

4. A terminal according to claims 1 and 2, **characterized in that** the virtual machine (2) uses the adaptation layer (3) to access the backlighting of the keyboard (6) via a backlighting manager (8) of the keyboard (6).

5. A terminal according to claims 1 and 2, **characterized in that** the virtual machine (2) uses the adaptation layer (3) to access the flash memory (1) via a flash memory (1) manager (4).

6. A terminal according to claims 1 to 5, **characterized in that** the terminal is a radio communication terminal.

7. A terminal according to claims 1 to 6, **characterized in that** the terminal is a personal digital assistant.
